# EUROPEAN PATENT APPLICATION

(11) **EP 1 146 583 A1**
(43) Date of publication of application: **17.10.2001**
(21) Application number: 01107052.1
(22) Date of filing: 21.03.2001
(51) Int. Cl.: H01M 8/12, C04B 35/50

(54) **Process for the preparation of electrolytic membranes**

(30) Priority: 14.04.2000 IT MI000839
(71) Applicant: Enitechnologie S.p.A., 20097 San Donato Milanese (Milan) (IT)
(72) Inventor: Capuano, Federico, Rieti (IT); Pittalis, Francesco, Roma (IT); Tintinelli, Alberto, Roma (IT)
(74) Representative: Gennari, Marco, Dr.

(57) **Abstract**

Process for the preparation of electrolytes of the planar type, comprising the following steps:
(a) preparation of a dispersion (slurry) of a powder comprising Ceria (CeO₂) stabilized with Gadolinia;
(b) optional sieving of the slurry of step (a);
(c) deaeration and subsequent casting of the slurry of step (a) or (b) obtaining a tape;
(d) drying of the tape obtained in step (c);
(e) cutting of the dried tape obtained in step (d) so as to obtain samples having the desired dimensions;
(f) dewaxing and sintering of the samples obtained in step (e) by means of a thermal cycle with a temperature of up to 1700°C.

## Description

The present invention relates to a process for the preparation, by means of tape casting, of SOFC electrolytes.

SOFC (Solid Oxide Fuel Cell) electrolytes must satisfy very severe requisites of a functional and structural nature. The functional requisites are: very high conductivity to the oxygen ion and extremely high gas impermeability. The functional specifications however are conditioned by structural specifications. In fact, a high ionic conductivity can be obtained, in the case of materials based on zirconia stabilized with yttria (YSZ, Yttria Stabilized Zirconia), only at a high temperature (higher than 900°C) and if the thickness of the electrolyte is as fine as possible, whereas gas impermeability can be obtained for electrolytes without open cavities with a relative density of not less than 97%. These density values require the use of high temperatures for long sintering times, which, owing to a weakening of the materials, tends to produce high thicknesses.

A process has now been found which allows the production, with forming by means of tape casting and sintering, of gas impermeable electrolytes having adequate thicknesses for obtaining high ionic conductivities and with planarities suitable for the subsequent deposition of electrodes. The electrolytes thus prepared have high ionic conductivities, even at not excessively high temperatures, typically around 750°C.

In accordance with this, the present invention relates to a process for the preparation of electrolytes of the planar type comprising the following steps:
(a) preparation of a dispersion (slurry) of a powder comprising Ceria (CeO₂) stabilized with Gadolinia, the above powder having a surface area ranging from 5 to 20 m²/g, preferably from 10 to 15 m²/g, the above dispersion being prepared by mixing the powder with one or more solvents, one or more dispersing agents, one or more ligands and one or more plasticizers;
(b) optional sieving of the slurry of step (a);
(c) deaeration and subsequent casting of the slurry of step (a) or (b) obtaining a tape;
(d) drying of the tape obtained in step (c) ;
(e) cutting of the dried tape obtained in step (d) so as to obtain samples having the desired dimensions;
(f) dewaxing and sintering of the samples obtained in step (e) by means of a thermal cycle with a temperature of up to 1700°C, preferably up to 1600°C.

When necessary, step (a) of the present invention can be preceded by a calcination operation of the powder (of CeO₂), normally effected at a temperature of 1000°C-1200°C.

In the preferred embodiment, the molar percentage ratio between Ceria and Gadolinia ranges from 95/5 to 65/35, preferably from 90/10 to 70/30.

Step (a) consists in the preparation of a slurry (commonly defined as casting slip) as homogeneous as possible. For this purpose the mixture of powder, solvent, dispersing agents, ligands and plasticizers, is mixed with suitable media, for example by means of a planetary mill. In a preferred embodiment the ligands and plasticizers are selected from polyvinyl butyral, dibutylphthalate, polyethyleneglycol.

In the preferred embodiment, powders, solvent and dispersing agent are first mixed for a time which is sufficient to obtain a homogeneous slurry, indicatively about 6 hours.

The ligands, plasticizers and detaching agent are subsequently added to the slurry thus obtained. The mixing then continues until the end slurry is obtained, indicatively a further 18 hours.

Step (b) consists in the optional sieving of the slurry obtained at the end of step (a). This operation may become necessary when the end slurry has aggregates which remain after the mixing phase (a).

Step (c) consists in the deaeration and subsequent casting of the slurry of step (a) or (b). The deaeration can be carried out according to techniques well known to experts in the field, for example, by rotation on the main axis of the casting slip container. The slurry thus deaerated is subjected to casting by pouring into appropriate cavities, usually in the basin of the mobile trolley of the casting bench. In this case the width of the basin automatically determines the width of the tape obtainable.

Step (d) consists in drying the tape obtained in step (c). In the preferred embodiment, this step is effected in air directly on the casting plane. An indicative time for this operation is about 12 hours.

Step (e) consists in cutting the dried tape obtained in step (d) in order to obtain samples having the desired dimensions.

The dried and cut tape obtained at the end of step (e) is finally subjected to dewaxing and sintering (step f). In the preferred embodiment, a thermal cycle is used with a temperature of up to 1700°C, preferably up to 1600°C. This operation can be carried out in one or more steps. The term "dewaxing" indicates the loss of organic material (for example dispersing agent, solvent, ligand) due to heating.

The process of the present invention allows electrolytes to be obtained with thicknesses of less than 200 µm and a planarity tolerance of less than 5% of the maximum thickness. The relative density of the above cells is higher than 97% of the theoretical value. The hydrogen permeability is < 1.25x10⁻¹¹I/(bar s cm²).

The process of the present invention allows electrolytic membranes to be obtained, which can operate ideally at temperatures of about 750°C, lower than those (about 950-1000°C) necessary in the case of traditional materials (for example based on zirconia).

In fact, the electrolytic membranes based on ceria obtained according to the process of the present invention have an ionic conductivity at 750°C in the order of 0.07 - 0.1 S/cm. The fuel cells based on ceria, obtained according to the process of the present invention, can consequently operate at lower temperatures than those using zirconia as electrolyte, without significantly influencing the electric efficiency. The non-high operating temperature of these fuel cells therefore minimizes the degradation effects of both the materials forming the cell and also of the materials of the components necessary for the assembling of the stack.

The following examples provide a better illustration of the present invention.

### EXAMPLE 1

The components and quantities used in the preparation of electrolytic membranes consisting of Ceria stabilized with Gadolinia with the formulation (CeO₂)_{0.8}(GdO_{1.5})_{0.2} are the following:
- 100 grams of Ceria powder (CeO₂) stabilized with Gadolinia with a surface area ranging from 10 to 15 m²/g;
- 49 grams of solvent consisting of methylethylketone (64%) and ethanol (34%);
- 1.2 grams of dispersing agent;
- 5.0 grams of polyvinyl butyral;
- 4.5 grams of polyethyleneglycol;
- 4.2 grams of dibutylphthalate;
- 1.0 grams of phosphoric ester as detaching agent.

In a first phase, a mixture is prepared, consisting of ceria powder, the solvent and dispersing agent, which is put under stirring in a planetary mill for 6 hours. In a second phase, the ligands and plasticizers (polyvinyl butyral, polyethyleneglycol, dibutylphthalate) are added and the mixture is maintained under stirring for a further 18 hours.
- The second step of the process consists in the sieving, deaeration and casting of the mixture.

In this respect, the slurry (commonly defined as casting slip) thus prepared is sieved with a 40 µm sieve to eliminate any possible powder aggregates remaining after the mixing. This is followed by the deaeration step for a period of 6 to 16 hours by means of the continuous rotation on the main axis of the casting slip container.

At this point the slurry can be sent for casting. It is poured into the cavity of the mobile trolley of the casting plane equipped with two blades, whose distance from the casting plane is regulated, with micrometric screws, the first at 800 µm in the feed direction and the second at 750 µm, respectively. The profile of the two blades is slightly different: the first with an orthogonal edge regulates the height of the tape, the second, with a rounded edge, finishes the surface. The width of the trolley basin automatically determines the width of the tape. The trolley speed, regulated by an electric movement system, is equal to 0.7 m/min.
- Drying

The drying of the tape previously formed is effected on the casting plane in not less than 12 hours in air. After drying, the tape is cut into square membranes by means of a pressure punching system. The dimensions are generally selected so as to obtain an end-product (sintered membranes) with dimensions ranging from 5x5 cm² and 10x10 cm².
- Dewaxing and sintering at 1600°C.

After cutting, the samples are put into an oven and subjected to dewaxing and sintering processes according to the following thermal cycle:
from room temperature to 170°C in 10 hours,
isothermal pause for 0.5 hours,
rise in 4 hours to 210°C,
isothermal pause for 0.5 hours,
rise in 10 hours to 450°C,
isothermal pause for 4 hours,
rise in 10 hours to 1100°C,
isothermal pause for 0.5 hours,
rise in 8 hours to 1600°C,
isothermal pause for 5 hours,
cooling for 10 hours to 1000°C,
cooling for 10 hours to 300°C,
cooling for 8 hours to room temperature.

The process described above allows the production of electrolytes with a thickness in the order of 100-150 µm. The relative density is higher than 97% of the theoretical value.

### EXAMPLE 2

The components and quantities used in the preparation of electrolytic membranes consisting of Ceria stabilized with Gadolinia with the formulation (CeO₂)_{0.9}(GdO_{1.5})_{0.1} are the following:
- 100 grams of Ceria powder (CeO₂) stabilized with Gadolinia with a surface area ranging from 10 to 15 m²/g;
- 49 grams of solvent consisting of methylethylketone (64%) and ethanol (34%) ;
- 1 gram of dispersing agent;
- 6.5 grams of polyvinyl butyral;
- 6.5 grams of dibutylphthalate;
- 1.5 grams of phosphoric ester as detaching agent.

In a first phase, a mixture is prepared, consisting of ceria powder, the solvent and dispersing agent, which is put under stirring in a planetary mill for 16 hours. In a second phase, the ligands and plasticizers (polyvinyl butyral, dibutylphthalate) are added and the mixture is maintained under stirring for a further 24 hours.
- The second step of the process consists in the sieving, deaeration and casting of the mixture.

In this respect, the slurry thus prepared is sieved with a 40 µm sieve to eliminate any possible powder aggregates remaining after the mixing. This is followed by the deaeration step for a period of 6 to 16 hours by means of the continuous rotation on the main axis of the casting slip container.

At this point the slurry can be sent for casting. It is poured into the cavity of the mobile trolley of the casting plane equipped with two blades, whose distance from the casting plane is regulated, with micrometric screws, the first at 800 µm in the feed direction and the second at 750 µm respectively. The profile of the two blades is slightly different: the first with an orthogonal edge regulates the height of the tape, the second, with a rounded edge, finishes the surface. The width of the trolley basin automatically determines the width of the tape. The trolley speed, regulated by an electric movement system, is equal to 0.7 m/min.
- Drying

The drying of the tape previously formed is effected on the casting plane in not less than 12 hours in air. After drying, the tape is cut into square membranes by means of a pressure punching system. The dimensions are generally selected so as to obtain an end-product (sintered membranes) with dimensions ranging from 5x5 cm² and 10x10 cm².
- Dewaxing and sintering at 1600°C.

After cutting, the samples are put into an oven and subjected to dewaxing and sintering; processes according to the following thermal cycle:
Pre-sintering cycle
from room temperature to 170°C in 10 hours,
isothermal pause for 0.5 hours,
rise in 4 hours to 210°C,
isothermal pause for 0.5 hours,
rise in 10 hours to 450°C,
isothermal pause for 4 hours,
rise in 10 hours to 1300°C,
isothermal pause for 3 hours,
cooling for 10 hours to 1000°C,
cooling for 8 hours to room temperature.

- Sintering and flattening cycle

In this case the pre-sintered membrane is placed between two flattened plates made of inert material to obtain membranes with a high planarity by exploiting the softening effect and shrinkage of the membrane due to sintering:
rise in 10 hours to 1300°C,
rise in 10 hours to 1600°C,
isothermal pause for 3 hours,
cooling for 10 hours to 1000°C,
cooling for 8 hours to room temperature.

The process described above allows the production of electrolytes with a thickness in the order of 100-150 µm. The relative density is higher than 97% of the theoretical value.

### EXAMPLE 3

The components and quantities used in the preparation of electrolytic membranes consisting of Ceria stabilized with Gadolinia with the formulation (CeO₂)_{0.85} (GdO_{1.5}) _{0.15} are the following:
- 100 grams of Ceria powder (CeO₂) stabilized with Gadolinia with a surface area ranging from 10 to 15 m²/g;
- 49 grams of solvent consisting of methylethylketone (64%) and ethanol (34%);
- 1.2 grams of dispersing agent;
- 5.0 grams of polyvinyl butyral;
- 4.5 grams of polyethyleneglycol;
- 4.2 grams of dibutylphthalate;
- 1.0 gram of phosphoric ester as detaching agent.

In a first phase, a mixture is prepared, consisting of ceria powder, the solvent and dispersing agent, which is put under stirring in a planetary mill for 6 hours. In a second phase, the ligands and plasticizers (polyvinyl butyral, polyethyleneglycol, dibutylphthalate) are added and the mixture is maintained under stirring for a further 18 hours.
- The second step of the process consists in the sieving, deaeration and casting of the mixture.

The casting slip thus prepared is sieved with a 40 µm sieve to eliminate any possible powder aggregates remaining after the mixing. This is followed by the deaeration step for a period of 6 to 16 hours by means of the continuous rotation on the main axis of the casting slip container.

At this point the slurry can be sent for casting. It is poured into the cavity of the mobile trolley of the casting plane equipped with two blades, whose distance from the casting plane is regulated, with micrometric screws, the first at 800 µm in the feed direction and the second at 750 µm respectively. The profile of the two blades is slightly different: the first with an orthogonal edge regulates the height of the tape, the second, with a rounded edge, finishes the surface. The width of the trolley basin automatically determines the width of the tape. The trolley speed, regulated by an electric movement system, is equal to 0.7 m/min.
- Drying

The drying of the tape previously formed is effected on the casting plane in not less than 12 hours in air. After drying, the tape is cut into square membranes by means of a pressure punching system. The dimensions are generally selected so as to obtain an end-product (sintered membranes) with dimensions ranging from 5x5 cm² and 10x10 cm².
- Dewaxing and sintering at 1600°C.

After cutting, the samples are put into an oven and subjected to dewaxing and sintering processes according to the following thermal cycle:
** Sintering cycle
from room temperature to 170°C in 10 hours,
isothermal pause for 0.5 hours,
rise in 4 hours to 210°C,
isothermal pause for 0.5 hours,
rise in 10 hours to 450°C,
isothermal pause for 4 hours,
rise in 10 hours to 1300°C,
rise in 10 hours to 1600°C,
isothermal pause for 3 hours,
cooling for 10 hours to 1000°C,
cooling for 8 hours to room temperature.
** Flattening cycle

In this case the completely sintered membrane is placed between two flattened plates made of inert material to obtain membranes with a high planarity by exploiting the softening of the ceramic membrane at temperatures higher than 1350°C:
rise in 10 hours to 1300°C,
rise in 10 hours to 1400°C,
isothermal pause for 10 hours,
cooling for 10 hours to 1000°C,
cooling for 8 hours to room temperature.

The process described above allows the production of electrolytes with a thickness in the order of 100-150 µm. The relative density is higher than 97% of the theoretical value.

### Electrical characterization

The electric membranes prepared according to what is described above are subjected to electrical tests to determine their ionic conductivity, according to the Van der Pauw four point system.

A fragment of the membrane is inserted into a cell holder. It should be noted that the contact is effected on the external edges of the sample, using platinum wires to make the contact area as small as possible, as indicated in the Van der Pauw method.

The sample holder is put into a quartz tube situated inside a tubular oven. The measurement control in relation to the temperature and data acquisition were effected via computer with proprietary software.

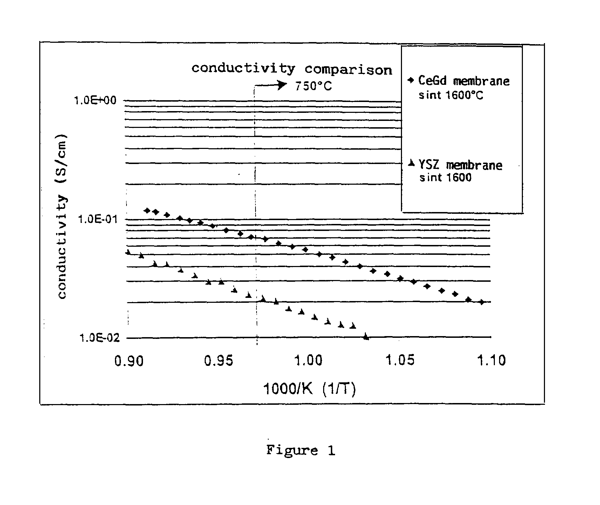

Figure 1 shows the conductivity in relation to the temperature (Arrhenius plot) of membranes based on ceria and, as a comparison, the typical conductivity of membranes based on zirconia.

Figure 1 demonstrates that the absolute ionic conductivity values of both membranes coincide with those cited in literature. In addition the conductivity of ceria at 750°C has values comparable with the conductivity of zirconia at 950°C.

### EXAMPLE 1A - Preparation of an SOFC cell with an electrolyte prepared as described in EXAMPLE 2.

A layer of anodic paste made with a NiO/Ceria cermet is deposited via serigraph onto an electrolyte prepared according to EXAMPLE 2, and a cathodic paste prepared with perovskite of the LSM type (Lanthanum Strontium Manganite) is deposited via serigraph onto the other side of the same electrolyte. The serigraph parameters are the following: advance speed of 15 cm/sec, screen-substrate distance of 1.1 mm, layer of about 10 microns for each doctor blade passage.

The thicknesses of the electrodes are 30-40 microns and they are deposited on a surface of 9x9 cm; as the electrolyte has a dimension of 10x10 cm, there remains a free edge of 1 cm.

After drying for 1 hour at 120°C, the electrodes are co-sintered at 1200°C using the following cycle:
- rise to 120°C at 50°C/hour and then to 170°C at a rate of 10°C/hour;
- pause of 2 hours at 170°C;
- rise to 210°C at a rate of 5°C/hour and subsequent pause of 2 hours;
- rise to 250°C at 5°C/hour and subsequent pause of 2 hours;
- rise to 440°C at a rate of 20°C/hour;
- rise to 800°C at a rate of 50°C/hour and subsequent pause of 3 hours;
- rise to 1200°C at a rate of 120°C/hour and subsequent pause of 2 hours;
- drop to 80°C with a cooling rate of 120°C/hour.

The cell thus prepared provides, in a typical application, the following results:
with an air flow of 2 liters per minute and a hydrogen flow of 0.5 liters per minutes at 500°C, 700 mV are obtained with an current intensity of about 400 mA per cm².

## Claims

1. A process for the preparation of electrolytes of the planar type comprising the following steps:
(a) preparation of a dispersion (slurry) of a powder comprising Ceria (CeO₂) stabilized with Gadolinia, the above powder having a surface area ranging from 5 to 20 m²/g, the above dispersion being prepared by mixing the powder with one or more solvents, one or more dispersing agents, one or more ligands and one or more plasticizers;
(b) optional sieving of the slurry of step (a);
(c) deaeration and subsequent casting of the slurry of step (a) or (b) obtaining a tape;
(d) drying of the tape obtained in step (c);
(e) cutting of the dried tape obtained in step (d) so as to obtain samples having the desired dimensions;
(c) dewaxing and sintering of the samples obtained in step (e) by means of a thermal cycle with a temperature of up to 1700°C.

2. The process according to claim 1, wherein the powder has a surface area ranging from 10 to 15 m²/g.

3. The process according to claim 1, wherein step (f) is carried out by means of a thermal cycle with a temperature of up to 1600°C.

4. The process according to claim 1, wherein the solvent of step (a) is a mixture of methylethylketone and ethanol.

5. The process according to claim 1, **characterized in that** the molar percentage ratio between Ceria and Gadolinia ranges from 95/5 to 65/35.

6. The process according to claim 5, **characterized in that** the molar percentage ratio between Ceria and Gadolinia ranges from 90/10 to 70/30.

7. The process according to claim 1, **characterized in that** the ligands and plasticizers are selected from polyvinyl butyral, dibutylphthalate, polyethyleneglycol.

8. Solid oxide fuel cells (SOFC) **characterized in that** the electrolyte of the above cells is prepared according to the process of example 1.
